(19) Europäisches Patentamt
European Patent Office
Office européen des brevets

(11) Veröffentlichungsnummer: **0 290 899 B1**

(12) **EUROPÄISCHE PATENTSCHRIFT**

(45) Veröffentlichungstag der Patentschrift: **22.09.93**

(51) Int. Cl.$^5$: **C09K 7/00**, C09K 7/06

(21) Anmeldenummer: **88107006.4**

(22) Anmeldetag: **02.05.88**

# (54) Zusatzmittel für Bohrflüssigkeiten, Herstellung und Verwendung.

(30) Priorität: **09.05.87 DE 3715574**

(43) Veröffentlichungstag der Anmeldung:
**17.11.88 Patentblatt 88/46**

(45) Bekanntmachung des Hinweises auf die Patenterteilung:
**22.09.93 Patentblatt 93/38**

(84) Benannte Vertragsstaaten:
**DE**

(56) Entgegenhaltungen:
**EP-A- 0 191 558**
**US-A- 4 311 600**
**US-A- 4 594 169**

(73) Patentinhaber: **Henkel Kommanditgesellschaft auf Aktien**

**D-40191 Düsseldorf(DE)**

Patentinhaber: **HUGHES TOOL COMPANY (GERMANY) GmbH**
**Bruchweg 23**
**D-29313 Hambühren(DE)**

(72) Erfinder: **Scoggins, William Chrys, Dr.**
**Berkefeldweg 11**
**D-3100 Celle(DE)**
Erfinder: **Herold, Claus Peter, Dr.**
**Ostpreussenerstrasse 26**
**D-4020 Mettmann(DE)**
Erfinder: **Müller, Heinz, Dr.**
**Goldregenweg 4**
**D-4019 Monheim-Baumberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 290 899 B1

## Beschreibung

Die Erfindung betrifft ein Zusatzmittel für Bohrflüssigkeiten, ein Verfahren zur Herstellung eines solchen Zusatzmittels und die Verwendung eines solchen Zusatzmittels zur Herstellung von gegen Flüssigkeitsverlust geschützten Bohrflüssigkeiten.

In der Tiefbohrindustrie werden Bohrflüssigkeiten verwendet, un das Bohrklein an die Oberfläche zu transportieren, den Flüssigkeits- oder Gasdruck der Formation zu kompensieren, den Bohrmeißel zu kühlen, die jeweilige Formation zu stabilisieren und die Reibung zwischen Gestänge und Formation zu reduzieren.

Man unterscheidet prinzipiell zwei Arten von Bohrspülungstypen, nämlich eine wasserbasische Spülung und eine ölbasische Spülung. Wie aus dem Namen schon hervorgeht, handelt es sich bei der wasserbasischen Spülung um eine Bohrflüssigkeit, die als Hauptkomponente Wasser enthält, welches durch Zusatz verschiedener Additive in seinen rheologisch/chemischen Eigenschaften, je nach Bedarf, verändert wird.

Im Gegensatz dazu enthält die ölbasische Spülung als Hauptkomponente (abgesehen von Beschwerungsmaterialien) Diesel oder sogenanntes "clean oil". Dieser Spülungstyp wird analog zur wasserbasischen Spülung mit rheologieverändernden Additiven behandelt, die allerdings infolge des hydrophoben Charakters der Basiskomponente von unterschiedlicher chemischer Zusammensetzung sind.

In den letzten Jahren wurden in zunehmendem Maße Bohrspülungen auf Ölbasis benutzt, wobei in den heutigen Ölspülungen kein reines Öl als flüssige Phase vorliegt, sondern eine Wasser-in-Öl Emulsion, wobei das Öl die kontinuierliche Phase darstellt.

Solche invertierten Emulsionen besitzen meistens ein Öl/Wasser-Verhältnis von etwa 80/20, können aber auch schon mit einem Öl/Wasser-Verhältnis von 60/40 eingesetzt werden.

Welcher Spülungstyp eingesetzt wird, hängt nicht nur von den chemischen, thermischen und mechanischen Gegebenheiten der jeweiligen Bohrung ab, sondern wird auch durch ökologische und andere Gesichtspunkte bestimmt.

Es gibt eine Vielzahl von Additiven, die den beiden Spülungstypen zugesetzt werden, um deren Eigenschaften zu bestimmten. Eines davon ist ein sogenanntes "fluid loss additive" (abgekürzt FLA).

Diese aus dem englischen Sprachraum stammende Bezeichnung beschreibt ein Zusatzmittel, welches verhindert, daß die Spülung unter Einwirkung von Temperatur und Druck in die oft poröse Formation strömt.

Ein solcher Spülungsverlust hat nicht nur finanzielle Nachteile wegen der verlorenen Bohrflüssigkeit zur Folge, sondern kann auch die gesamte Stabilität des Bohrloches durch das Auswaschen der Formation, den Verlust des Gegendruckes etc. gefährden und die Umwelt beeinträchtigen.

Die vorliegende Erfindung betrifft ein solches "fluid loss additive" für ölbasische Bohrflüssigkeiten.

Es sind zahlreiche Huminsäurederivate bekannt, die zum Einsatz als "fluid loss additive" bestimmt sind.

In der DE-B-1 181 707 wird ein Verfahren zur Herstellung von Humatsalzen mit substituierten Aminen offenbart, wobei Lignit mit alkalischer, wäßriger Lösung aufgeschlossen und nach Neutralisation in wäßriger Lösung mit einem Ammoniumsalz umgesetzt wird.

Die DE-B-1 249 788 betrifft ein Verfahren zur Behandlung einer ölhaltigen Bohrspülung, wobei diese gegen übermäßige Ölverluste durch Filtration mit einem Humat versetzt wird, welches ein Salz der Huminsäure mit höheren Aminen darstellt.

Die EP-B-49 484 offenbart ein Verfahren zur Herstellung eines Flüssigkeitsverluste vermindernden Additives für Bohrlochbearbeitungsflüssigkeiten auf Ölbasis, welches durch Mischen von Braunkohle oder Huminsäure mit einem öllöslichen oder in Öl dispergierbaren Aminsalz, Amidamin oder Amidaminsalz hergestellt wird.

Weitere Amin- und Amid-Derivate werden in den US-A-3 281 458, 3 755 447, 3 671 427, 4 597 878 und 3 494 865 offenbart.

Die US-A-4 421 655 offenbart ein "fluid loss additive" bestehend aus einer Polyphenol-Verbindung, die Huminsäure sein kann, bestimmten Ammoniumverbindungen und einem polyvalenten, metallischen Kation. Das Kation kann Calcium, Magnesium, Eisen, Zink, Nickel, Chrom oder Aluminium sein, wobei Calcium bevorzugt wird.

Die verschiedenen bekannten Additive werden im allgemeinen durch Erhitzen mit Hilfe eines Lösungsmittels hergestellt.

Die deutsche Patentanmeldung P 37 11 950.8 beschreibt ein Zusatzmittel für Bohrflüssigkeiten enthaltend eine metallorganische Verbindung der allgemeinen Formel

$$L_xM(OR)_yX_z$$

worin

M  Titan, Zirkon oder Vanadium bedeutet,
L  einen Huminsäurerest darstellt,
R  $C_{1-6}$-Alkyl, vorzugsweise $C_3$- oder $C_4$-Alkyl ist,
X  ein langkettiger Fettsäurerest OOCR' oder ein langkettiger aliphatischer oder aromatischer Sulfonsäurerest $-SO_3R''$ oder ein langkettiger Alkoholrest -OR' oder ein langkettiger Amidoaminrest

R"'NCOR'
'

oder ein langkettiger Aminrest -NR'R' ist,
wobei
R'  $C_{10-22}$-, vorzugsweise $C_{14-18}$-Alkyl oder Alkenyl und
R"  Aryl oder R' und
R"'  H oder eine aliphatische Gruppe mit 1 bis 22, vorzugsweise 1 bis 18 C-Atomen

bedeuten
und
x = 1, 2, 3 oder 4,
z = 1, 2, 3 oder 4,
y = v-x-z

bedeuten, wobei v die Wertigkeit von M ist, seine Herstellung und seine Verwendung als "fluid loss agent".

Die vorliegende Erfindung offenbart ein neuartiges "fluid loss additive", welches eine metallorganische Verbindung von Titan oder einem ähnlichen Metall ist.

Gegenstand der vorliegenden Erfindung ist somit ein Zusatzmittel für Bohrflüssigkeiten, die auf Wasser-in-Öl-Emulsionen basieren, bestehend aus einem Huminsäurederivat, welches dadurch gekennzeichnet ist, daß es eine metallorganische Verbindung enthält, die der allgemeinen Formel (I)

$$L_xM(OR)_yX_z \quad (I)$$

entspricht, mit:
L = Huminsäurerest,
M = Titan, Zirkon oder Vanadium,
R = $C_{1-10}$-Alkylrest,
x = 1, 2, 3, oder 4,
z = 1, 2, 3 oder 4,
y = v-x-z, wobei v die Wertigkeit von M ist,

und worin dem Rest X eine oder mehrere der folgenden Bedeutungen zukommt:
a) = Fettsäurealkoxylatrest $-(A)_p-OOCR^1$,
b) = Fettalkoholpolyalkylenglykoletherrest $-(A)_p-OR^2$,
c) = Aminalkoxylatrest $-(A)_q-NHR^1$, der gegebenenfalls mit einer Hydroxylgruppe substituiert ist,
d) = wasserunlöslicher Polyalkoxylatrest $-(AR)_r-Y$,
e) = Fettsäurerest,

mit:
$R^1$ = $C_{5-40}$-Alkyl oder -Alkenyl,
$R^2$ = $C_{8-28}$-Alkyl oder -Alkenyl,
A = Alkylenoxideinheit, ausgewählt aus Ethylenoxid, Propylenoxid und Butylenoxid, wobei insbesondere zwei oder mehrere dieser Einheiten kombiniert sind,
Y = Rest eines kurzkettigen Moleküls, ausgewählt aus kurzkettigen Alkoholen, Glykolen, Glycerin oder anderen Polyolen, Aminen und kurzkettigen Fettsäuren,
p = Wert von 1 bis 10,
q = Wert von 1 bis 20,
r = Wert von 10 bis 200,

wobei die metallorganische Verbindung auf einem anorganischen Träger aufgebracht ist, sofern der Rest X ausschließlich einen Fettsäurerest darstellt, und wobei dieselbe nur gegebenenfalls auf einen anorganischen Träger aufgebracht ist, sofern der Rest X einen der unter a bis d definierten Reste darstellt.

Vorzugsweise ist R $C_3$-Alkyl oder $C_4$-Alkyl und p besitzt einen Wert von 2 bis 3, q einen Wert von 1 bis 10 und r einen Wert von 10 bis 60.

Das zentrale Metallatom ist vorzugsweise Titan, obwohl auch ähnliche Metalle wie Zirkon oder Vanadium brauchbar sind.

Huminsäuren sind amorphe Verbindungen, die im Boden aus abgestorbenem, vorwiegend pflanzlichem Ausgangsmaterial durch chemische und biologische Umsetzungen entstehen. Sie bilden eine Gruppe von hochmolekularen, stark adsorbierenden Stoffen, die z.B. in zersetzten Pflanzenteilen, Torf und Braunkohlen, nicht aber in Steinkohlen vorkommen und wahrscheinlich aus zersetztem Lignin entstanden sind. Die Huminsäuren besitzen sowohl Carboxylgruppen als auch phenolische Hydroxylgruppen und sind in Alkalien löslich. Als preisgünstiger Rohstoff mit einem hohen Anteil an Huminsäuren hat sich Braunkohlenstaub (Lignit) bewährt, der erfindungsgemäß unmittelbar als Huminsäurekomponente eingesetzt werden kann. Dieser Rohstoff enthält, je nach Alter der Braunkohle, unterschiedliche Mengen an Huminsäuren. In den zur vorliegenden Erfindung führenden Versuchen wurde Braunkohlenstaub mit einem durchschnittlichen Huminsäuregehalt von 60 % eingesetzt.

Zweckmäßigerweise ist der Braunkohlenstaub fein gemahlen.

Das erfindungsgemäße "Fluid Loss Additive" kann in einfacher Weise unmittelbar aus den Komponenten ohne Mitverwendung eines Lösungsmittels und ohne Erhitzung hergestellt werden.

Das Verfahren zur Herstellung eines erfindungsgemäßen Zusatzmittels ist dadurch gekennzeichnet, daß man ein Metallalkoholat der allgemeinen Formel (II)

$M(OR)_v$ (II),

in der M, R und v die für die allgemeine Formel (I) angegebenen Bedeutungen aufweisen, mit mindestens einer die Gruppe X der allgemeinen Formel (I) liefernden Verbindung in einem Molverhältnis von 1 : <4, vorzugsweise von 1 : (1 bis 2), gegebenenfalls unter Zusatz von Katalysatoren, vorzugsweise tert. Aminen, umsetzt und das Umsetzungsprodukt anschließend mit Huminsäure oder einem huminsäurehaltigen Produkt, vorzugsweise ohne Zusatz eines Lösungsmittels, zur Reaktion bringt.

Bei der Herstellung eines erfindungsgemäßen Zusatzstoffes geht man aus von einem Metallalkoholat der angegebenen Formel, vorzugsweise von einem Titanalkoholat der Formel

$Ti(OR)_4$.

Die Gruppe OR bezeichnet einen Alkoholrest, im allgemeinen einen linearen oder verzweigten $C_{1-10}$-Alkoxy-Rest, wobei R für Methyl, Ethyl, n-Propyl, i-Propyl, n-Butyl, i-Butyl, sec-Butyl, tert.-Butyl, n-Pentyl, n-Hexyl, n-Heptyl, n-Octyl, n-Nonyl, n-Decyl oder die entsprechenden verzweigten höheren $C_{6-10}$-Alkylreste stehen kann. Diese bevorzugten Verbindungen leiten sich von der hypothetischen Orthotitansäure ab und können auch als Titan(IV)-alkoxide bezeichnet werden. Besonders bevorzugt werden Tetrapropyltitanat, Tetraisopropyltitanat und Tetrabutyltitanat, welche farblose Flüssigkeiten darstellen.

Diese Alkoholate werden mit einer die Gruppe X liefernden Verbindung umgesetzt.

Hierbei entstehen die folgenden Gruppen von Derivaten:

1.) Fettsäurealkoxylat-Derivate

$Ti(OR)_{4-n}((A)_pOOCR^1)_n$ $(A)_pOOCR^1$ = Fettsäurealkoxylatrest

2.) Fettalkoholnolyalkylenalykolether-Derivate

$Ti(OR)_{4-n}((A)_p\text{-}OR^2)_n$ $(A)_pOR^2$ = Fettalkoholpolyalkylenglykoletherrest

3.) Aminalkoxylat-Derivate

$Ti(OR)_{4-n}((A)_qNHR^1)_n$ $(A)_qNHR^1$ = langkettiger Aminalkoxylatrest, der ggfls. mit einem Hydroxylrest substituiert ist

4.) Polyalkoxylat-Derivate

$Ti(OR)_{4-n}((A)_r\text{-}Y)_n$ $(A)_r\text{-}Y$ = wasserunlöslicher Polyalkoxylatrest

wobei n gleich oder größer als 1 aber gleich oder kleiner als 3 ist.

Theoretisch könnten alle Alkoholat-Gruppen im bevorzugt verwendeten Titanalkoholat durch die Gruppe X ersetzt werden, bei den Titanverbindungen könnte also das Molverhältnis von Alkoholat zur X-liefernden

Verbindung theoretisch 1 : 4 betragen. Da aber mindestens eine Alkoholat-Gruppe für eine weitere Verknüpfung mit der Huminsäure unsubstituiert bleiben muß, muß n bei den Titanatverbindungen kleiner als 4 sein, d.h. im allgemeinen darf n nicht größer als 3 sein. Vorzugsweise beträgt das Molverhältnis 1 : (1-2).

A kann in den obigen Derivaten für mindestens ein Alkylenoxidaddukt stehen, das von Ethylenoxid, Propylenoxid oder Butylenoxid abgeleitet ist und durch die allgemeine Formel

$(OCHR^3CH_2)$ bzw. $(OCH_2CHR^3)$,

wobei $R^3$ für H, Methyl oder Ethyl stehen kann, repräsentiert wird.

Diese Alkylenoxidaddukte können in den Komponenten der obigen Formel X in beliebiger Weise miteinander kombiniert werden, so daß also entweder Ketten gleichartiger Alkylenoxidaddukte oder Kombinationen dieser Alkylenoxidaddukte entstehen. Bevorzugt wird bei den Fettsäurealkoxylaten, den Fettalkoholpolyalkylenglykyolethern und bei den langkettigen Aminalkoxylaten eine Kombination von 2 dieser Alkylenoxidaddukte.

p bezeichnet die Anzahl der Kombinationen gleicher oder verschiedener Alkylenoxidgruppen. Diese kann maximal 10, vorzugsweise 2 bis 3 betragen. q bezeichnet ebenfalls die Anzahl der Kombinationen gleicher oder verschiedener Alkylenoxidgruppen. Diese kann 1 bis 20, vorzugsweise 1 bis 10 betragen. r steht für die Anzahl der Kombinationen gleicher oder verschiedener Alkylenoxidgruppen. Diese kann einen Wert von 10 bis 200, vorzugsweise von 10 bis 60 aufweisen.

Geeignete Fettsäuren sind lineare oder verzweigte $C_5$ bis $C_{40}$-Alkylcarbonsäuren oder $C_5$ bis $C_{40}$-Alkenylcarbonsäuren sowie deren Dimerisationsprodukte mit bis zu 44 Kohlenstoffatomen und Cycloalkylfettsäuren, vorzugsweise solche mit 12 bis 22 C-Atomen. Beispiele hierfür sind die Laurinsäure, Myristinsäure, Pentadecansäure, Palmitinsäure, Heptadecansäure, Stearinsäure, Nonadecansäure, Arachinsäure, Heneicosansäure, Behensäure, Myristoleinsäure, Palmitoleinsäure, Petroselinsäure, Petroselaidinsäure, Ölsäure, Elaidinsäure, Linolsäure, Linolaidinsäure, Linolensäure, $\alpha$-Eläostearinsäure, $\beta$-Eläostearinsäure, Cadoleinsäure, Arachidonsäure, Erucasäure, Brassidinsäure und Clupanodonsäure, verzweigte Fettsäuren mit dieser Anzahl an C-Atomen sowie deren Gemische. Besonders bevorzugt ist die Ölsäure oder Gemische dieser Verbindungen, wie sie aus natürlichen Fetten und Ölen zugänglich sind.

Die Umsetzung der Fettsäure mit dem/den Alkylenoxid(en) erfolgt in an sich bekannter Weise.

Besonders bevorzugte Fettsäurealkoxylate sind beispielsweise ein Ölsäurealkoxylat oder technische Fettsäuremischungen, die Ölsäure bzw. andere ungesättigte Fettsäuren enthalten, die 2 bis 4 Alkylenoxideinheiten besitzen.

Geeignete Fettalkohole sind lineare oder verzweigte $C_8$ bis $C_{28}$-Alkylalkohole oder lineare oder verzweigte $C_8$ bis $C_{28}$-Alkenylalkohole, vorzugsweise solche mit 12 bis 22 C-Atomen. Beispiele hierfür sind Laurylalkohol, Tridecanol, Myristylalkohol, Pentadecanol, Cetylalkohol, Heptadecanol, Stearylalkohol, Nonadecanol, Arachidylalkohol, Heneicosanol, Behenylalkohol, Oleylalkohol, Elaidylalkohol, Ricinolalkohol, Linoleylalkohol, Linolenylalkohol, Gadoleylalkohol, Arachidonalkohol, Erucaalkohol und Brassidylalkohol, verzweigte Fettalkohole mit dieser Anzahl an C-Atomen sowie deren Gemische. Besonders bevorzugt ist der Oleylalkohol und der Cetylalkohol oder Gemische dieser Verbindungen, wie sie aus natürlichen Fetten und Ölen zugänglich sind. Ein besonders bevorzugter Fettalkoholpolyalkylenglykolether ist der Oleylpolyalkylenglykolether bzw. Cetylalkoholpolyalkylenglykolether mit 2 bis 4 Alkylenoxidaddukt-Einheiten.

Die Umsetzung des Fettalkohols mit dem/den Alkylenoxid(en) erfolgt in an sich bekannter Weise.

Langkettige Alkylamine oder langkettige Alkenylamine, die gegebenenfalls mit einem Hydroxylrest substituiert sind, können solche mit 5 bis 40 C-Atomen, vorzugsweise mit 12 bis 22 C-Atomen sein.

Die Umsetzung des langkettigen Alkylamins oder langkettigen Alkenylamins, das gegebenenfalls mit einem Hydroxylrest substituiert ist, mit dem/den Alkylenoxid(en) erfolgt in an sich bekannter Weise. Bevorzugt ist die Verwendung eines langkettigen, gegebenenfalls durch eine Hydroxylgruppe substituierten Aminalkoxylats, das 5 bis 15 mol Alkylenoxid besitzt.

Bei den Polyalkoxylat-Derivaten kann Y für einen Rest eines kurzkettigen Startermoleküls stehen. Dies kann beispielsweise ein kurzkettiger Alkohol, ein Glykol, Glycerin oder ein anderes Polyol, ein Amin oder eine kurzkettige Fettsäure sein.

Die Umsetzungsprodukte mit dem bevorzugt verwendeten Titantetraalkoxylat können nicht nur in reiner Form, sondern auch auf einen anorganischen Träger aufgebracht mit dem Huminsäure-haltigen Produkt umgesetzt werden.

Als anorganische Trägermaterialien kommen poröse Materialien, wie beispielsweise Kieselsäure, hydrophobierte Kieselsäure, Kieselgur, Talkum oder Zeolithe in Betracht, wobei der Anteil an Flüssigprodukt bis zu 55 % betragen kann.

Weiterhin können auch Mischungen der Umsetzungsprodukte von den bevorzugten Titantetraalkoxylaten mit Fettsäurealkoxylaten, Fettalkoholpolyalkylenglycolethern, Aminoalkoxylaten bzw. Polyalkoxylaten, denen gegebenenfalls bis zu 75 % Fettsäure, vorzugsweise bis zu 50 % und besonders bevorzugt bis zu 25 % zugemischt werden kann, entweder mit oder ohne Zusatz eines anorganischen Trägermaterials verwendet werden.

Schließlich kann man auch eine Fettsäure oder Fettsäuregemische mit dem bevorzugt verwendeten Titantetraalkoxylat, wie in der Deutschen Patentanmeldung P 37 11 950.8 beschrieben, umsetzen. In diesem Falle wird das Umsetzungsprodukt auf einem anorganischen Trägermaterial aufgetragen und anschließend mit dem Huminsäure-haltigen Produkt umgesetzt. In diesem Sinne ist es erfindungsgemäß bevorzugt, daß in der allgemeinen Formel (I) X Reste von technischen Fettsäuregemischen, vorzugsweise solchen, die aus Kokosfett, Talg oder Tallöl zugänglich sind, bedeutet.

Die Umsetzung des besonders bevorzugten Tetraisopropyltitanat mit Alkoxylaten geschieht am zweckmäßigsten, indem 1 bis 2 Mol des Alkoxylats oder Mischungen derselben oder Mischungen mit Fettsäuren, gegebenenfalls unter Zusatz von Katalysatoren, wie z.B. tert. Amine, langsam unter Rühren und gegebenenfalls Kühlung zum Tetraisopropylorthotitanat zugetropft werden.

Das so entstandene Umsetzungsprodukt der ersten Verfahrensstufe wird alsdann mit Huminsäure oder einem Huminsäure-haltigen Produkt, vorzugsweise ohne Zusatz eines Lösungsmittels, zur Reaktion gebracht. Vorzugsweise wird hierfür fein gemahlener Braunkohlenstaub in einem Rührwerk bzw. einem Pulvermischer unter ständiger Bewegung mit dem bevorzugt verwendeten Titan-Derivat ohne Erhitzen vermischt, beispielsweise indem das Titan-Derivat unter ständigem Rühren auf den Braunkohlenstaub aufgesprüht wird. Die Temperatur steigt bei dieser Reaktion automatisch an, je nach Dosierung auf 30 bis 40 °C. Eine Kühlung ist im allgemeinen jedoch nicht notwendig. Bei dieser Reaktion dienen die unterschiedlichen Hydroxy- und Carboxyl-Gruppen sowie andere leicht abspaltbare Protonen liefernde Gruppen der Huminsäure als Angriffspunkte für die jeweiligen bevorzugt verwendeten Titan-Derivate, wodurch eine Verknüpfung unter Abspaltung eines Alkoholatrestes von dem Titan-Derivat erfolgt.

Im allgemeinen setzt man ein Verhältnis von Braunkohlenstaub zu bevorzugt verwendeter Titanverbindung von 10 : 1 bis 1 : 1 ein, wobei ein rieselfähiges Endprodukt gewährleistet ist. Ist die bevorzugt verwendete Titanverbindung oder das bevorzugt verwendete Titanverbindungsgemisch auf einem anorganischen Träger aufgebracht, so beträgt das Verhältnis Braunkohlenstaub zu Pulver 1 : 9 bis 9 : 1, vorzugsweise 7 : 3 bis 8 : 2.

Die erste bevorzugte Ausführungsform des erfindungsgemäßen Herstellungsverfahrens ist dadurch gekennzeichnet, daß man ein Metallalkoholat mit der oben definierten allgemeinen Formel $M(OR)_v$ mit mindestens einem Fettsäurealkoxylat, das 2 bis 4 Alkylenoxideinheiten besitzt und eventuellem Zusatz von Fettsäure(n) in einem Molverhältnis von 1 : (1-2), gegebenenfalls unter Kühlung bei einer Temperatur von 20 bis 60 °C umsetzt, wobei das Umsetzungsprodukt dieses Metallalkoholats der oben definierten allgemeinen Formel $M(OR)_v$ gegebenenfalls auf einem anorganischen Träger aufgebracht ist, und das Umsetzungsprodukt anschließend in einem Gewichtsverhältnis von 1 : (10-1) auf fein gemahlenen, in ständiger Bewegung gehaltenen Braunkohlenstaub aufsprüht oder mit diesem vermischt.

Die zweite bevorzugte Ausführungsform des erfindungsgemäßen Herstellungsverfahrens ist dadurch gekennzeichnet, daß man ein Metallalkoholat der oben definierten allgemeinen Formel $M(OR)_v$ mit mindestens einem Fettalkoholpolyalkylenglykolether, der 2 bis 4 Alkylenglykoleinheiten besitzt und eventuellem Zusatz von Fettsäure(n) in einem Molverhältnis von 1 : (1-2), gegebenenfalls unter Kühlung bei einer Temperatur von 20 bis 60 °C umsetzt, wobei das Umsetzungsprodukt dieses Metallalkoholats der oben definierten allgemeinen Formel $M(OR)_v$ gegebenenfalls auf einem anorganischen Träger aufgebracht ist, und das Umsetzungsprodukt anschließend in einem Gewichtsverhältnis von 1 : (10-1) auf fein gemahlenen, in ständiger Bewegung gehaltenen Braunkohlenstaub aufsprüht oder mit diesem vermischt.

Die dritte bevorzugte Ausführungsform des erfindungsgemäßen Herstellungsverfahrens ist dadurch gekennzeichnet, daß man ein Metallalkoholat der oben definierten allgemeinen Formel $M(OR)_v$ mit mindestens einem Aminoalkoxylat oder Hydroxyaminoalkoxylat, das 5 bis 15 Alkylenoxideinheiten besitzt und eventuellem Zusatz von Fettsäure(n) in einem Molverhältnis von 1 : (1-2), gegebenenfalls unter Kühlung bei einer Temperatur von 20 bis 60 °C umsetzt, wobei das Umsetzungsprodukt dieses Metallalkoholats der oben definierten allgemeinen Formel $M(OR)_v$ gegebenenfalls auf einem anorganischen Träger aufgebracht ist, und das Umsetzungsprodukt anschließend in einem Gewichtsverhältnis von 1 : (10-1) auf fein gemahlenen, in ständiger Bewegung gehaltenen Braunkohlenstaub aufsprüht oder mit diesem vermischt.

Die vierte bevorzugte Ausführungsform des erfindungsgemäßen Herstellungsverfahrens ist dadurch gekennzeichnet, daß man ein Metallalkoholat der oben definierten allgemeinen Formel $M(OR)_v$ mit mindestens einem wasserunlöslichen Polyalkoxylat, das 10 bis 60 Alkylenoxideinheiten besitzt, und eventuellem Zusatz von Fettsäure(n) in einem Molverhältnis von 1 : (1-2), gegebenenfalls unter Kühlung bei einer

Temperatur von 20 bis 60 °C umsetzt, wobei das Umsetzungsprodukt dieses Metallalkoholats der oben definierten allgemeinen Formel $M(OR)_v$ gegebenenfalls auf einem anorganischen Träger aufgebracht ist, und das Umsetzungsprodukt anschließend in einem Gewichtsverhältnis von 1 : (10-1) auf fein gemahlenen, in ständiger Bewegung gehaltenen Braunkohlenstaub aufsprüht oder mit diesem vermischt.

Die fünfte bevorzugte Ausführungsform des erfindungsgemäßen Herstellungsverfahrens ist dadurch gekennzeichnet, daß man ein Metallalkoholat der oben definierten allgemeinen Formel $M(OR)_v$ mit Gemischen aus Fettsäurealkoxylaten, Fettalkoholpolyalkylenglycolethern, Aminoalkoxylaten oder Hydroxyaminoalkoxylaten bzw. Polyalkoxylaten entsprechend den Ausführungsformen 1 bis 4 und eventuellem Zusatz von Fettsäure(n) in einem Molverhältnis von 1 : (1-2), gegebenenfalls unter Kühlung bei einer Temperatur von 20 bis 60 °C umsetzt, wobei das Umsetzungsprodukt dieses Metallalkoholats der oben definierten allgemeinen Formel $M(OR)_v$ gegebenenfalls auf einem anorganischen Träger aufgebracht ist, und das Umsetzungsprodukt anschließend in einem Gewichtsverhältnis von 1 : (10-1) auf fein gemahlenen, in ständiger Bewegung gehaltenen Braunkohlenstaub aufgesprüht oder mit diesem vermischt.

Die sechste bevorzugte Ausführungsform des erfindungsgemäßen Herstellungsverfahrens ist dadurch gekennzeichnet, daß man ein Metallalkoholat der oben definierten allgemeinen Formel $M(OR)_v$ mit mindestens einer Fettsäure in einem Molverhältnis von 1 : (1-2), gegebenenfalls unter Kühlung bei einer Temperatur von 20 bis 60 °C umsetzt, wobei das Umsetzungsprodukt dieses Metallalkoholats der oben definierten allgemeinen Formel $M(OR)_v$ auf einem anorganischen Träger aufgebracht ist, und das Umsetzungsprodukt anschließend in einem Gewichtsverhältnis von 1 : (10-1) mit fein gemahlenem, in ständiger Bewegung gehaltenen Braunkohlenstaub vermischt.

Mit Vorteil wird für die vorstehend genannten bevorzugten Ausführungsformen ein Tetraalkylorthotitanat, besonders bevorzugt das Tetraisopropyltitanat, verwendet.

Bei dieser letzten Reaktionsstufe wird die bevorzugt verwendete Titanverbindung durch eine kovalente Bindung fest mit dem Huminsäuremolekül verknüpft, wodurch ein äußerst temperaturstabiles, als "Fluid Loss Additive" besonders geeignetes Produkt entsteht.

Das nach dem beschriebenen Verfahren herstellbare Zusatzmittel kann vorteilhaft verwendet werden zur Herstellung einer gegen Flüssigkeitsverlust geschützten Bohrflüssigkeit auf Basis einer Wasser-in-Öl Emulsion.

Die Menge des zu der Bohrflüssigkeit zuzusetzenden erfindungsgemäßen Zusatzmittels hängt von der Art des Bohrloches, dem Bohrverfahren, sowie anderen Bedingungen ab. Im allgemeinen beträgt die Menge 1 bis 20 Gew.-%, insbesondere 1 bis 5 Gew.-%, bezogen auf die unbeschwerte Spülung.

Der Fluid Loss wurde unter Verwendung der nachstehend beschriebenen ölbasischen Spülung unter Anwendung der nach den Beispielen 1 bis 12 hergestellten erfindungsgemäßen Fluid Loss-Additive wie folgt bestimmt:

Untersuchung der Alterung von Bohrspülungen und Bestimmung des Hochtemperatur/Hochdruck-Fluid Loss:

Die Spülung gibt man in eine Alterungszelle (Druckzelle), die in einen roll-oven gelegt wird. Dieser Ofen (Firma Jürgens) ist mit Walzen ausgestattet, die die Autoklaven bei 177 °C 16 Stunden lang rollen.

Nach dem Abkühlen wird der Autoklav geöffnet und die Spülung für die Bestimmung des HTHP-Flüssigkeitsverlustes entnommen.

Der HTHP-Flüssigkeitsverlust wird entsprechend der API-Standard Procedure for Testing Drilling Fluids (API RP 13 B) bei 34,48 bar (500 psi) und 177 °C bestimmt.

Herstellung einer ölbasischen Spülung

Für die Herstellung einer typischen ölbasischen Bohrspülung, wie sie für alle weiteren Vergleichsversuche verwendet wurde, werden die unten aufgeführten Chemikalien in der beschriebenen Reihenfolge unter Verwendung eines Multimixers (Firma Jürgens) und Einhaltung der angegebenen Rührzeiten zusammengegeben.

| | Rührzeit (Stufe 6) |
|---|---|
| 168 ml Diesel | |
| 6 g Invermul®* | 1 min. |
| 3 g $Ca(OH)_2$ | 1 min. |
| 6 g Fluid-Loss-Additiv | 1 min. |
| 3 g EZ-mul®* | 1 min. |
| 73 ml 45 %ige $CaCl_2.2H_2O$-Lösung | 10 min. |
| 2 g Geltone®** | 15 min. |
| 167 g Baryt | 10 min. |

* Fa. Baroid; Emulgatoren des Typs Amidoamine
** Fa. Baroid; organophiler Bentonit

Neben dieser als Standardspülung für die Tests verwendeten Spülung sind je nach Praxiserfordernissen die folgenden Variationsmöglichkeiten üblich:
168 ml Diesel oder Mudöle, wie z.B. BP 83 HF, Conoco Oil usw.
6 bis 12 g Primär- und Sekundäremulgator
1 bis 3 g Fluid Loss Additiv
bis zu 80 ml $CaCl_2$-Lösung oder andere Elektrolytlösung
1 bis 3 g organophiler Bentonit
bis zu 400 g Baryt, je nach Beschwerungserfordernis.

Beispiel 1

Das beschriebene Umsetzungsprodukt aus Tetraisopropyltitanat mit Fettsäurealkoxylaten (Molverhältnis 1 : 1,3) wurde mit Braunkohlenstaub intensiv vermischt und nach Alterung (16 h bei 177 °C) der HTHP-Fluid Loss gemessen.

| Alkoxylat | Gew.-% bez. auf Braunkohle | HTHP-Fluid Loss ml |
|---|---|---|
| Ölsäure + 3 EO* | 20 | 19 |
| Ölsäure + 3 EO | 30 | 9 |
| Ölsäure + 2,5 PO* | 30 | 15 |
| Ölsäure + 2,5 EO | 30 | 7 |
| Marktprodukt** | 30 | 32 |
| Blindwert ohne Fluid Loss Additiv | -- | 95 |

* EO: Ethylenoxid; PO: Propylenoxid
** Als Marktprodukt wurde ein nach dem Slurryverfahren mit Aminoamiden hydrophobierter Lignit eingesetzt, der außerdem Asphalt enthielt.

Beispiel 2

Das beschriebene Umsetzungsprodukt aus Tetraisopropyltitanat mit Fettalkohol-alkoxylaten (Molverhältnis 1 : 1,3) wurde mit Braunkohlenstaub intensiv vermischt und nach Alterung der HTHP-Fluid Loss gemessen.

| Alkoxylat | Gew.-% bez. auf Braunkohle | HTHP-Fluid Loss ml |
|---|---|---|
| Oleyl/Cetylalkohol + 2 EO | 30 | 23 |
| C12/18-Alkohol + 2 EO + 4 PO | 30 | 29 |

Beispiel 3

Das beschriebene Umsetzungsprodukt aus Tetraisopropyltitanat mit Aminalkoxylaten (Molverhältnis 1 : 1,3) wurde mit Braunkohlenstaub intensiv vermischt und nach Alterung der HTHP-Fluid Loss gemessen.

| Alkoxylat | Gew.-% bez. auf Braunkohle | HTHP-Fluid Loss ml |
|---|---|---|
| C12/14-Olefin-epoxid + Di-ethanolamin + 10 PO | 20 | 17 |
| " | 30 | 5 |
| C12/16-Olefin-epoxid + 5 PO | 25 | 13,5 |
| Dodecylamin + 10 PO | 30 | 20 |

Beispiel 4

Das beschriebene Umsetzungsprodukt aus Tetraisopropyltitanat mit Polyalkoxylaten (Molverhältnis 1: 1,3) wurde mit Braunkohlenstaub intensiv vermischt und nach Alterung der HTHP-Fluid Loss gemessen.

| Alkoxylat | Gew.-% bez. auf Braunkohle | HTHP-Fluid Loss ml |
|---|---|---|
| Propylenglykol 2020 | 30 | 22 |
| Polyglycerin + 22 PO | 30 | 24 |

Beispiel 5

Eine Mischung aus 85 Teilen Lignit und 15 Teilen pulverförmigem Hydrophobiermittel, nämlich
50 Teilen hydrophobierter Kieselsäure R972,
50 Teilen eines Umsetzungsproduktes aus Tetraisopropyltitanat und Fettsäurealkoxylat (Molverhältnis: 1 : 1,3)
wurde auf ihre Fluid Loss-Eigenschaft hin untersucht.
Nach Alterung wurde ein HTHP-Fluid Loss von 17 ml gefunden.

Beispiel 6

Eine Mischung aus 85 Teilen Lignit und 15 Teilen pulverförmigem Hydrophobiermittel, nämlich
50 Teilen Kieselsäure R 972,
50 Teilen eines Umsetzungsproduktes aus Tetraisopropyltitanat und Hydroxyamin* + 10 EO (Molverhältnis 1 : 2)
wurde auf ihre Fluid Loss-Eigenschaft hin untersucht.

* 12/14 α-Olefinepoxid + Diethanolamin

Es wurde ein HTHP-Fluid Loss von 14 ml gefunden.

Beispiel 7

Eine Mischung, wie sie in Beispiel 6 beschrieben worden ist, bei der aber statt Kieselsäure R 972 Kieselgur benutzt worden ist, wurde auf ihre Fluid Loss-Eigenschaften hin untersucht.
Nach Alterung wurde ein HTHP-Fluid Loss von 21 ml gefunden.

Beispiel 8

Eine Mischung aus 85 Teilen Lignit und 15 Teilen pulverförmigem Hydrophobierungsmittel, nämlich
35 Teilen hydrophobierte Kieselsäure Sipernat® D17
65 Teilen eines Umsetzungsproduktes aus Tetraisopropyltitanat und Fettsäure (Molverhältnis 1 : 1,3)
wurde auf ihre Fluid Loss-Eigenschaft hin untersucht.
Nach Alterung wurde ein HTHP-Fluid Loss von 9 ml gefunden.

Beispiel 9

Eine Mischung aus 85 Teilen Lignit und 15 Teilen pulverförmigem Hydrophobierungsmittel, nämlich
35 Teilen hydrophobierte Kieselsäure Sipernat® D17
65 Teilen eines Umsetzungsproduktes aus Tetraisopropyltitanat und Fettsäurealkoxylat
wurde auf ihre Fluid Loss-Eigenschaft hin untersucht.
Nach Alterung wurde ein HTHP-Fluid Loss von 6 ml gefunden.

Beispiel 10

Eine Mischung aus 85 Teilen Lignit und 15 Teilen pulverförmigem Hydrophobierungsmittel, nämlich
50 Teilen hydrophobierte Kieselsäure R972
50 Teilen eines Umsetzungsproduktes aus Tetraisopropyltitanat und Fettsäure (Molverhältnis 1 : 1,3)
Nach Alterung wurde ein HTHP-Fluid Loss von 18,5 ml gefunden.

Beispiel 11

Eine Mischung aus 85 Teilen Lignit und 15 Teilen pulverförmigem Hydrophobierungsmittel, nämlich
35 Teilen hydrophobierte Kieselsäure Sipernat® D17
65 Teilen eines Umsetzungsproduktes aus Tetraisopropyltitanat und einem Gemisch aus 50 Teilen Fettsäure und 50 Teilen Fettsäurealkoxylat (Molverhältnis 1 : 1,3)
wurde auf ihre Fluid Loss-Eigenschaft hin untersucht.
Nach Alterung wurde ein HTHP-Fluid Loss von 9 ml gefunden.

Beispiel 12

Eine Mischung aus 85 Teilen Lignit und 15 Teilen pulverförmigem Hydrophobierungsmittel, nämlich
50 Teilen hydrophobierter Kieselsäure R972
50 Teilen eines Umsetzungsproduktes aus Tetraisopropyltitanat und einem Gemisch aus 50 Teilen Fettsäure und 50 Teilen Fettsäurealkoxylat (Molverhältnis 1 : 1,3).
Nach Alterung wurde ein HTHP-Fluid Loss von 16,5 ml gefunden.

## Patentansprüche

**1.** Zusatzmittel für Bohrflüssigkeiten, die auf Wasser-in-Öl-Emulsionen basieren, bestehend aus einem Huminsäurederivat,
dadurch gekennzeichnet,
daß es eine metallorganische Verbindung enthält, die der allgemeinen Formel (I)

$$L_xM(OR)_yX_z \qquad (I)$$

entspricht, mit:

L = Huminsäurerest,
M = Titan, Zirkon oder Vanadium,
R = $C_{1-10}$-Alkylrest,
x = 1, 2, 3, oder 4,
z = 1, 2, 3 oder 4,
y = v-x-z, wobei v die Wertigkeit von M ist,

und worin dem Rest X eine oder mehrere der folgenden Bedeutungen zukommt:

a) = Fettsäurealkoxylatrest $-(A)_p-OOCR^1$,
b) = Fettalkoholpolyalkylenglykoletherrest $-(A)_p-OR^2$,
c) = Aminalkoxylatrest $-(A)_q-NHR^1$, der gegebenenfalls mit einer Hydroxylgruppe substituiert ist,
d) = wasserunlöslicher Polyalkoxylatrest $-(AR)_r-Y$,
e) = Fettsäurerest,

mit:

$R^1$ = $C_{5-40}$-Alkyl oder -Alkenyl,
$R^2$ = $C_{8-28}$-Alkyl oder -Alkenyl,
A = Alkylenoxideinheit, ausgewählt aus Ethylenoxid, Propylenoxid und Butylenoxid, wobei insbesondere zwei oder mehrere dieser Einheiten kombiniert sind,
Y = Rest eines kurzkettigen Moleküls, ausgewählt aus kurzkettigen Alkoholen, Glykolen, Glycerin oder anderen Polyolen, Aminen und kurzkettigen Fettsäuren,
p = Wert von 1 bis 10,
q = Wert von 1 bis 20,
r = Wert von 10 bis 200,

wobei die metallorganische Verbindung auf einem anorganischen Träger aufgebracht ist, sofern der Rest X ausschließlich einen Fettsäurerest darstellt, und wobei dieselbe nur gegebenenfalls auf einen anorganischen Träger aufgebracht ist, sofern der Rest X einen der unter a bis d definierten Reste darstellt.

**2.** Zusatzmittel nach Anspruch 1, dadurch gekennzeichnet, daß in der allgemeinen Formel (I) M Titan (IV) bedeutet.

**3.** Zusatzmittel nach Anspruch 1 oder 2, dadurch gekennzeichnet, daß in der allgemeinen Formel (I) R Propyl, Isopropyl oder Butyl bedeutet.

**4.** Zusatzmittel nach einem oder mehreren der Ansprüche 1 bis 3, dadurch gekennzeichnet, daß in der allgemeinen Formel (I) R $C_3$-Alkyl oder $C_4$-Alkyl bedeuten und p einen Wert von 2 bis 3, q einen Wert von 1 bis 10 und r einen Wert von 10 bis 60 aufweisen.

**5.** Zusatzmittel nach einem oder mehreren der Ansprüche 1 bis 4, dadurch gekennzeichnet, daß in der allgemeinen Formel (I) $R^1$ und $R^2$ $C_{12-22}$-Alkyl oder $C_{12-22}$-Alkenyl bedeuten.

**6.** Zusatzmittel nach einem oder mehreren der Ansprüche 1 bis 3, dadurch gekennzeichnet, daß in der allgemeinen Formel (I) X Reste von technischen Fettsäuregemischen, vorzugsweise solchen, die aus Kokosfett, Talg oder Tallöl zugänglich sind, bedeutet.

**7.** Verfahren zur Herstellung eines Zusatzmittels nach einem der Ansprüche 1 bis 6, dadurch gekennzeichnet, daß man ein Metallalkoholat der allgemeinen Formel (II)

$$M(OR)_v \quad (II),$$

in der M, R und v die für die allgemeine Formel (I) angegebenen Bedeutungen aufweisen, mit mindestens einer die Gruppe X der allgemeinen Formel (I) liefernden Verbindung in einem Molverhältnis von 1 : <4, vorzugsweise von 1 : (1 bis 2), gegebenenfalls unter Zusatz von Katalysatoren, vorzugsweise tert. Aminen, umsetzt und das Umsetzungsprodukt anschließend mit Huminsäure oder einem huminsäurehaltigen Produkt, vorzugsweise ohne Zusatz eines Lösungsmittels, zur Reaktion bringt.

**8.** Verfahren nach Anspruch 7, dadurch gekennzeichnet, daß man als huminsäurehaltiges Produkt Braunkohlenstaub verwendet, wobei man Braunkohlenstaub mit dem Umsetzungsprodukt der ersten Verfahrensstufe in einem Gewichtsverhältnis von (10 bis 1) : 1 zur Reaktion bringt.

**9.** Verfahren nach Anspruch 8, dadurch gekennzeichnet, daß man Braunkohlenstaub in einem Rührwerk oder Pulvermischer in Bewegung hält und das Umsetzungsprodukt der ersten Verfahrensstufe auf den Braunkohlenstaub aufsprüht oder in anderer geeigneter Weise aufträgt oder vermischt.

**10.** Verfahren nach Ansprüchen 7 bis 9, dadurch gekennzeichnet, daß man das Metallalkoholat mit mindestens einer die Gruppe X liefernden Verbindung, gegebenenfalls unter Zusatz von Fettsäure(n), in einem Molverhältnis von 1 : (1 bis 2), gegebenenfalls unter Kühlung, bei einer Temperatur von 20 bis 60 °C umsetzt, wobei die die Gruppe X liefernde Verbindung ausgewählt ist aus:

a) Fettsäurealkoxylaten, die 2 bis 4 Alkylenoxideinheiten aufweisen,
b) Fettalkoholpolyalkylenglykolethern, die 2 bis 4 Alkylenglykoleinheiten aufweisen,
c) Aminoalkoxylaten oder Hydroxyaminoalkoxylaten, die 5 bis 15 Alkylenoxideinheiten aufweisen,
d) wasserunlöslichen Polyalkoxylaten, die 10 bis 60 Alkylenoxideinheiten aufweisen,
e) Gemischen der vorstehenden Verbindungen a bis d,

wobei das Umsetzungsprodukt des Metallakoholats gegebenenfalls auf einem anorganischen Träger aufgebracht ist, und wobei man das Umsetzungsprodukt anschließend in einem Gewichtsverhältnis von 1 : (10 bis 1) auf fein gemahlenen, in ständiger Bewegung gehaltenen Braunkohlenstaub aufsprüht oder mit diesem vermischt.

**11.** Verfahren nach Anspruch 10, dadurch gekennzeichnet, daß der Anteil der zugemischten Fettsäure(n), bezogen auf die Gesamtmenge der die Gruppe X liefernden Verbindung, bis zu 75 %, vorzugsweise bis zu 50 % und insbesondere bis zu 25 %, beträgt.

**12.** Verfahren nach Ansprüchen 7 bis 9, dadurch gekennzeichnet, daß man das Metallakoholat mit mindestens einer Fettsäure als Gruppe X liefernde Verbindung in einem Molverhältnis von 1 : (1 bis 2), gegebenenfalls unter Kühlung, bei einer Temperatur von 20 bis 60 °C umsetzt, wobei das Umsetzungsprodukt des Metallalkoholats auf einem anorganischen Träger aufgebracht ist, und wobei man das Umsetzungsprodukt anschließend in einem Gewichtsverhältnis von 1 : (10 bis 1) auf fein gemahlenen, in ständiger Bewegung gehaltenen Braunkohlenstaub aufsprüht.

**13.** Verfahren nach Ansprüchen 7 bis 12, dadurch gekennzeichnet, daß als Metallalkoholat Tetraalkylorthotitanat, insbesondere Tetraisopropylorthotitanat, eingesetzt wird.

**14.** Verwendung eines Zusatzmittels nach einem der Ansprüche 1 bis 6 oder herstellbar nach einem der Ansprüche 7 bis 13 zur Herstellung einer gegen Flüssigkeitsverlust geschützten Bohrflüssigkeit.

## Claims

**1.** An additive for drilling fluids based on water-in-oil emulsions consisting of a huminic acid derivative, characterized in that it contains an organometallic compound corresponding to general formula (I):

$$L_xM(OR)_yX_z \qquad (I)$$

in which

L = huminic acid residue,
M = titanium, zirconium or vanadium,
R = $C_{1-10}$ alkyl radical,
x = 1, 2, 3 or 4,
z = 1, 2, 3 or 4,
y = v-x-z where v is the valency of M,

and in which X has one or more of the following meanings:

a) fatty acid alkoxylate unit $-(A)_p-OOCR^1$,
b) fatty alcohol polyalkylene glycol ether unit $-(A)_p-OR^2$,
c) aminoalkoxylate unit $-(A)_q-NHR^1$ optionally substituted by a hydroxyl group,
d) water-insoluble polyalkoxylate unit $-(AR)_r-Y$,
e) fatty acid unit
with

$R^1$ = $C_{5-40}$ alkyl or alkenyl,
$R^2$ = $C_{8-28}$ alkyl or alkenyl,
A = alkylene oxide unit selected from ethylene oxide, propylene oxide and butylene oxide; more particularly, two or more of these units are combined,
Y = residue of a short-chain molecule selected from short-chain alcohols, glycols, glycerol or other polyols, amines and short-chain fatty acids,
p = 1 to 10,
q = 1 to 20,
r = 10 to 200,

the organometallic compound being applied to an inorganic support where X is solely a fatty acid unit and purely optionally to an inorganic support where X has one of the meanings defined under a to d.

**2.** An additive as claimed in claim 1, characterized in that M in general formula (I) is titanium(IV).

**3.** An additive as claimed in claim 1 or 2, characterized in that R in general formula (I) is propyl, isopropyl or butyl.

**4.** An additive as claimed in one or more of claims 1 to 3, characterized in that R in general formula (I) is $C_3$ alkyl or $C_4$ alkyl and p has a value of 2 to 3, q has a value of 1 to 10 and r has a value of 10 to 60.

**5.** An additive as claimed in one or more of claims 1 to 4, characterized in that $R^1$ and $R^2$ in general formula (I) are $C_{12-22}$ alkyl or $C_{12-22}$ alkenyl.

**6.** An additive as claimed in one or more of claims 1 to 3, characterized in that X in general formula (I) represents residues of technical fatty acid mixtures, preferably those obtainable from coconut oil, tallow or tall oil.

**7.** A process for the production of the additive claimed in any of claims 1 to 6, characterized in that a metal alcoholate corresponding to general formula (II)

$$M(OR)_v \quad (II)$$

in which M, R and v are as defined for general formula (I), is reacted with at least one compound yielding the group X of general formula (I) in a molar ratio of 1 : <4 and preferably in a molar ratio of 1 : (1 to 2), optionally in the presence of catalysts, preferably tert. amines, and the reaction product is subsequently reacted with huminic acid or with a product containing huminic acid, preferably in the absence of a solvent.

**8.** A process as claimed in claim 7, characterized in that lignite dust is used as the product containing huminic acid, lignite dust being reacted with the reaction product of the first process step in a ratio by weight of (10 to 1) : 1.

**9.** A process as claimed in claim 8, characterized in that lignite dust is agitated in a stirrer or powder blender and the reaction product of the first process step is sprayed onto or otherwise suitably applied to, or mixed with, the lignite dust.

**10.** A process as claimed in claims 7 to 9, characterized in that the metal alcoholate is reacted with at least one compound yielding the group X, optionally in the presence of fatty acid(s), in a molar ratio of 1 : (1 to 2), optionally with cooling, at a temperature of 20 to 60 °C, the compound selecting the group X being selected from:
a) fatty acid alkoxylates containing 2 to 4 alkylene oxide units,
b) fatty alcohol polyalkylene glycol ethers containing 2 to 4 alkylene glycol units,
c) aminoalkoxylates or hydroxyaminoalkoxylates containing 5 to 15 alkylene oxide units,
d) water-insoluble polyalkoxylates containing 10 to 60 alkylene oxide units,
e) mixtures of the above-mentioned compounds a to d,
the reaction product of the metal alcoholate optionally being applied to an inorganic support and the reaction product subsequently being sprayed onto or mixed with finely ground, continuously agitated lignite dust in a ratio by weight of 1 : (10 to 1).

**11.** A process as claimed in claim 10, characterized in that the percentage of added fatty acid(s), based on the total quantity of compound yielding the group X, is up to 75%, preferably up to 50% and more preferably up to 25%.

**12.** A process as claimed in claims 7 to 9, characterized in that the metal alcoholate is reacted with at least one fatty acid as the compound yielding the group X in a molar ratio of 1 : (1 to 2), optionally with cooling, at a temperature of 20 to 60 °C, the reaction product of the metal alcoholate being applied to an inorganic support and the reaction product subsequently being sprayed onto finely ground, continuously agitated lignite dust in a ratio by weight of 1 : (10 to 1).

**13.** A process as claimed in claims 7 to 12, characterized in that tetraalkyl orthotitanate, more particularly tetraisopropyl orthotitanate, is used as the metal alcoholate.

**14.** The use of the additive claimed in any of claims 1 to 6 or obtainable by the process claimed in any of claims 7 to 13 for the production of a drilling fluid protected against liquid loss.

**Revendications**

**1.** Additif pour des fluides de forage qui sont basés sur des émulsions d'eau dans l'huile, consistant en un dérivé de l'acide humique,

caractérisé en ce qu'il renferme un composé organométallique qui correspond à la formule générale (I)

$L_xM(OR)_yX_z$ (I)

avec :

L = un reste d'acide humique
M = titane, zirconium ou vanadium
R = reste alcoyle en $C_1$ à $C_{10}$
x = 1, 2, 3 ou 4
z = 1, 2, 3 ou 4
y = v-x-z, dans lequel v est la valence de M

et dans laquelle il revient au reste X une ou plusieurs des significations suivantes :

a) = reste d'alcoxylate d'acide gras $-(A)_p-OOCR^1$,
b) = reste d'éther de polyalcoylèneglycol et d'alcool gras $-(A)-OR^2$,
c) = reste d'aminalcoxylate $-(A)_q-NHR^1$, qui est éventuellement substitué par un groupe hydroxyle,
d) = reste de polyalcoxylate insoluble dans l'eau $-(AR)_r-Y$,
e) = reste d'acide gras,

avec :

$R^1$ = alcoyle ou alcényle en $C_5$ à $C_{40}$,
$R^2$ = alcoyle ou alcényle en $C_8$ à $c_{28}$,
A = une unité d'oxyde d'alcoylène, choisie parmi l'oxyde d'éthylène, l'oxyde de propylène et l'oxyde de butylène, dans laquelle en particulier deux ou plusieurs de ces unités sont combinées,
Y = un reste d'une molécule à courte chaîne, choisi parmi des alcools à courte chaîne, des glycols, le glycérol ou d'autres polyols, des amines et des acides gras à courte chaîne,
p = valeur de 1 à 10
q = valeur de 1 à 20
r = valeur de 10 à 200

dans laquelle le composé organométallique est appliqué sur un support minéral, pour autant que le reste X représente exclusivement un reste d'acide gras et dans lequel ce composé lui même est appliqué seulement, le cas échéant, sur un support minéral, pour autant que le reste X représente un des restes définis sous a à d.

**2.** Additif selon la revendication 1, caractérisé en ce que dans la formule générale (I), M signifie le titane (IV).

**3.** Additif selon la revendication 1 ou 2, caractérisé en ce que dans la formule générale (I), R signifie un propyle, un isopropyle ou un butyle.

**4.** Additif selon une ou plusieurs des revendications 1 à 3, caractérisé en ce que dans la formule générale (I), R signifie un alcoyle en $C_3$ ou un alcoyle en $C_4$ et p possède une valeur de 2 à 3, q une valeur de 1 à 10 et r une valeur de 10 à 60.

**5.** Additif selon une ou plusieurs des revendications 1 à 4, caractérisé en ce que dans la formule générale (I), $R^1$ et $R^2$ signifient un alcoyle en $C_{12}$ à $C_{22}$ ou un alcényle en $C_{12}$ à $C_{22}$.

**6.** Additif selon une ou plusieurs des revendications 1 à 3, caractérisé en ce que dans la formule générale (I) X signifie des restes de mélanges d'acides gras industriels, de préférence ceux qui sont accessibles à partir de graisse de coco, de suif ou de tallöl.

**7.** Procédé d'obtention d'un additif selon une des revendications 1 à 6, caractérisé en ce que l'on fait réagir un alcoolate métallique de formule générale (II)

$M(OR)_v$ (II)

dans laquelle M, R et v possèdent les significations indiquées pour la formule générale (I), avec au moins un composé qui fournit le groupe X de formule générale (I) dans un rapport molaire de 1 : <4, de préférence de 1 : (1 à 2), le cas échéant en ajoutant des catalyseurs, de préférence des amines tertiaires et on met en réaction le produit de réaction ensuite avec l'acide humique ou avec un produit qui contient de l'acide humique, de préférence sans ajout de solvant.

**8.** Procédé selon la revendication 7, caractérisé en ce que l'on utilise comme produit renfermant de l'acide humique de la poussière de lignite dans lequel on porte en réaction la poussière de lignite avec le produit de réaction de la première étape du procédé dans un rapport pondéral de (10 à 1) : 1.

**9.** Procédé selon la revendication 8, caractérisé en ce que l'on maintient en réaction la poussière de lignite dans un dispositif d'agitation ou dans un mélangeur de poudres et que l'on pulvérise le produit de réaction de la première étape de procédé sur la poussière de lignite, ou qu'on l'applique d'une autre façon appropriée, ou bien qu'on mélange.

**10.** Procédé selon les revendications 7 à 9, caractérisé en ce que l'on fait réagir l'alcoolate de métal avec au moins un composé fournissant le groupe X, le cas échéant avec addition d'acide(s) gras dans un rapport molaire de 1 : (1 à 2), le cas échéant en refroidissant, à une température de 20 à 60 °C, le composé qui fournit le groupe X étant choisi parmi :
a) les alcoxylates d'acide gras qui possèdent de 2 à 4 unités d'alcoylène glycol,
b) des éthers de polyalcoylèneglycol et d'alcool gras qui possèdent de 2 à 4 unités d'alcoylèneglycol,
c) des aminoalcoxylates ou des hydroxyaminoalcoxylates qui possèdent de 5 à 15 unités d'oxyde d'alcoylène,
d) des polyalcoxylates insolubles dans l'eau qui possèdent de 10 à 60 unités d'oxyde d'alcoylène,
e) des mélanges des composés précédents a à d,
tandis que le produit de réaction de l'alcoolate metallique est appliqué le cas échéant sur un support minéral, et tandis qu'on pulvérise le produit de réaction ensuite dans un rapport pondéral de 1 : (10 à 1) sur la poussière de lignite maintenue en mouvement permanent et finement broyée, ou bien qu'on le mélange avec celle-ci.

**11.** Procédé selon la revendication 10, caractérisé en ce que la quantité d'acide(s) gras mélangé(s), rapportée à la quantité totale du composé qui fournit le groupe X, s'élève jusqu'à 75 %, de préférence jusqu'à 50 % et en particulier jusqu'à 25 %.

**12.** Procédé selon les revendications 7 à 9, caractérisé en ce que l'on fait réagir l'alcoolate métallique avec au moins un acide gras comme composé fournissant le groupe X dans un rapport molaire de 1 : (1 à 2), le cas échéant en refroidissant, à une température de 20 à 60 °C, tandis que le produit de réaction de l'alcoolate métallique est appliqué sur un support minéral et tandis que l'on pulvérise le produit de

réaction ensuite dans un rapport pondéral de 1 : (10 à 1) sur la poussière de lignite maintenue en mouvement permanent et finement broyée.

**13.** Procédé selon les revendications 7 à 12, caractérisé en ce que l'on met en oeuvre comme alcoolate métallique, un orthotitanate de tétraalcoyle, en particulier l'orthotitanate de tétraisopropyle.

**14.** Utilisation d'un additif selon l'une des revendications 1 à 6, ou que l'on peut produire selon l'une des revendications 7 à 13, en vue de la production d'un liquide de forage protégé contre les pertes de liquide.